(19) Europäisches Patentamt
European Patent Office
Office européen des brevets

(11) **EP 4 671 343 A1**

(12) **EUROPEAN PATENT APPLICATION**
published in accordance with Art. 153(4) EPC

(43) Date of publication:
**31.12.2025 Bulletin 2026/01**

(21) Application number: **24921260.6**

(22) Date of filing: **31.05.2024**

(51) International Patent Classification (IPC):
***C09K 8/66*** *(2006.01)* ***C09K 8/504*** *(2006.01)*
***C09K 8/03*** *(2006.01)*

(52) Cooperative Patent Classification (CPC):
**C09K 8/03; C09K 8/504; C09K 8/60; C09K 8/66; C09K 8/68; C09K 8/88**

(86) International application number:
**PCT/CN2024/096722**

(87) International publication number:
**WO 2025/161222 (07.08.2025 Gazette 2025/32)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **02.02.2024 CN 202410151238**

(71) Applicants:
- **China Petroleum & Chemical Corporation
Beijing 100728 (CN)**
- **Sinopec Southwest Oil & Gas Company
Chengdu, Sichuan 610041 (CN)**

(72) Inventors:
- **GUO, Tonglou
Chengdu, Sichuan 610041 (CN)**
- **LIN, Yongmao
Chengdu, Sichuan 610041 (CN)**
- **LEI, Wei
Chengdu, Sichuan 610041 (CN)**
- **LAN, Lin
Chengdu, Sichuan 610041 (CN)**
- **PAN, Baofeng
Chengdu, Sichuan 610041 (CN)**
- **TAN, Jia
Chengdu, Sichuan 610041 (CN)**

(74) Representative: **Hoffmann Eitle
Patent- und Rechtsanwälte PartmbB
Arabellastraße 30
81925 München (DE)**

(54) **NANO-MATERIAL-CONTAINING COMPOSITION AND PREPARATION METHOD THEREFOR AND USE THEREOF, AND FRACTURING FLUID**

(57) The present invention relates to the fracturing technology, and in particular to a nano-material-containing composition and a preparation method therefor and a use thereof, and a fracturing fluid. The composition comprises a nano material and a solvent. The hydrodynamic particle size of molecular aggregate of the composition satisfies: D10<30 μm, D50 = 50-150 μm, and D90 = 150-300 μm. The preparation method for the composition comprises: after hydroxylation of gas-phase nano-silicon dioxide in a solvent, making gas-phase nanosilicon dioxide come into contact with a monomer represented by formula (II) in the presence of an initiator, and activating the resulting product and then mixing same with a fluorocarbon surfactant. Also provide are a use of the composition in a fracturing fluid and a fracturing fluid containing the composition. The composition can facilitate rapid flowback of a fracturing fluid from a reservoir, thereby reducing the damage to the reservoirs.

EP 4 671 343 A1

## Description

### CROSS-REFERENCE TO RELATED APPLICATIONS

The application claims priority to Chinese Application No. 202410151238.8, filed on February 2, 2024, entitled "COMPOSITION CONTAINING NANOMATERIAL, PREPARATION METHOD THEREFOR AND USE THEREOF, AND FRACTURING FLUID", the content of which is specifically and entirely incorporated herein by reference.

### FIELD

The present disclosure relates to fracturing technologies, in particular to a composition containing a nanomaterial, a preparation method therefor and a use thereof, and a fracturing fluid containing the composition as a plugging agent.

### BACKGROUND

Along with the continuous progress of oil and gas resource development, the tight sandstone reservoirs have emerged as the important targets for oil and gas resource exploration and development. Fracturing is an important measure for enhancing reservoir production, which reduces flow resistance of fluids by using pressure to fracture the stratum and form cracks with flow conductivity. Wherein fracturing fluid is the key working fluid used in the fracturing process, in particular, the atmospheric pressure and low pressure tight sandstone reservoirs are characterized by low porosity, low permeability and high heterogeneity, making sand addition during fracturing modification construction challenging and imposing higher technical requirements on the fracturing fluid.

Currently, polymer viscosity-enhanced fracturing fluids are commonly used in the fracturing modification process, such as polyacrylamide type viscosity-enhanced fracturing fluids, however, this kind of fracturing fluids may cause severe damages to core substrate of the reservoirs, with damage rates more than 30%, and the post-construction fluid flow back is difficult, resulting in unsatisfactory gas production in some wells. The main factors causing substrate damages include adsorption retention and water-blocking damage of the polymer fracturing fluids, wherein the damage of adsorption retention, which accounts for more than 60% of the total damage to the reservoirs, is caused by thickener in the fracturing fluid forming in porous rock media; the damage of water blocking, causing difficulty in flow back of the fracturing fluid and low flow back rate, is caused by fracturing fluid invading the reservoirs, and will certainly affect the post-fracturing yield.

In response to the above-mentioned major damage factors of fracturing fluids to reservoirs, the common practice in China and foreign countries is to reduce damage on the reservoirs by adding cleanup additive and water-blocking-resistant agent into the fracturing fluid; however, the effects are unsatisfactory, in particular, the flow back efficiency of the fracturing fluid cannot be improved significantly. Therefore, it is urgent to develop a key treating agent that can reduce adsorption retention and water-blocking damage of the fracturing fluid, and can promote rapid flow back of the fracturing fluid in order to meet more technical requirements in fracturing modification of the low-permeability tight reservoirs.

### SUMMARY

The present disclosure aims to overcome the defects in the prior art that the fracturing fluid is prone to cause the adsorption retention and water-blocking damage to the reservoirs and has a low flow back efficiency after the fracturing operation, and provides a composition containing a nanomaterial, a preparation method therefor and use thereof, and a fracturing fluid, in which the composition can promote rapid flow of the fracturing fluid and flow back out of the reservoirs, thereby reducing the damages to reservoirs.

In order to achieve the above objects, the first aspect of the present disclosure provides a composition containing a nanomaterial, wherein hydrodynamic particle size of molecular aggregate of the composition satisfies that $D_{10}$ less than 30μm, $D_{50}$ = 50-150μm, and $D_{90}$ = 150-300μm.

The second aspect of the present disclosure provides a preparation method for a composition containing a nanomaterial, wherein the method comprises: hydroxylating a gas phase nanosilica in a solvent, then contacting the hydroxylated gas phase nanosilica with a monomer represented by formula (II) in the presence of an initiator, activating the obtained product and subsequently mixing with a fluorocarbon surfactant;

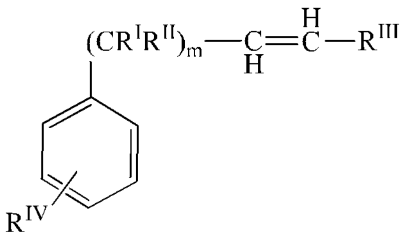

(II),

wherein $R^I$, $R^{II}$ and $R^{III}$ independently represent hydrogen or C1-C5 alkyl, $R^{IV}$ is hydrogen, C1-C5 alkyl or C2-C6 alkenyl, and m is an integer of 0-5.

The third aspect of the present disclosure provides the composition containing a nanomaterial produced with the aforementioned preparation method.

The fourth aspect of the present disclosure provides a use of the aforementioned composition containing a nanomaterial in a fracturing fluid.

The fifth aspect the present disclosure provides a fracturing fluid comprises the aforementioned composition containing a nanomaterial.

Due to the above technical scheme, the present disclosure produces the favorable effects as follows: when the composition provided by the present disclosure is used in a fracturing fluid system, the composition has excellent suspension dispersibility in the fracturing fluid and significantly reduces adsorption force of the fracturing fluid system and decreases the adsorption retention and water-blocking damage of the fluid to the reservoirs. Furthermore, the composition provide by the present disclosure has a surface tension no exceeding 25mN/m, and it can effectively promote rapid flow of the fracturing fluid and flow back out of the reservoirs, and increase the flow back rate of the fracturing fluid.

## DETAILED DESCRIPTION

The terminals and any value of the ranges disclosed herein are not limited to the precise ranges or values, such ranges or values shall be comprehended as comprising the values adjacent to the ranges or values. As for numerical ranges, the endpoint values of the various ranges, the endpoint values and the individual point value of the various ranges, and the individual point values may be combined with one another to produce one or more new numerical ranges, which should be deemed have been specifically disclosed herein.

The first aspect of the present disclosure provides a composition containing a nanomaterial, in which the composition comprises a nanomaterial and a solvent, wherein hydrodynamic particle size of molecular aggregate of the composition satisfies that $D_{10}$ less than 30μm, $D_{50}$ = 50-150μm, $D_{90}$ = 150-300μm.

During the research and development process, the present inventors have surprisingly discovered that by controlling the molecular aggregate hydrodynamic particle size of the composition containing a nanomaterial and solvent falls into the ranges that $D_{10}$ is less than 30μm, $D_{50}$ = 50-150μm, $D_{90}$ = 150-300μm, when the composition is used in a fracturing fluid system, the composition can be uniformly suspended and dispersed in the fracturing fluid, allow for multi-scale plugging of reservoirs having various dimensions during the fracturing process, exhibit high matching degree with the pore throats of tight sandstone reservoirs, and adapt with more technical requirements of fracturing and modificaiton for low permeability tight reservoirs; significantly reduce adsorption force of the fracturing fluid system, reduce the adsorption retention and water-blocking damage of liquid to the reservoir, and decrease the rock core damage rate of the fracturing fluid system to less than 15%.

In the present disclosure, the molecular aggregate hydrodynamic particle size refers to the apparent particle diameter of the molecular aggregate formed by aggregation of the nanomaterial in the composition, and the test method is as follows: performing a wet process testing by using a Fritsch 22 type laser particle size analyzer according to the "liquid medium dispersion and measurement method" in the China National Standard GB/T 19077-2016 "Particle size analysis - Laser diffraction methods"; $D_{10}$, $D_{50}$ and $D_{90}$ indicate the corresponding particle size (manually accumulating the percentages of all particle size in front of or behind the particle size) when a cumulative particle size distribution of the samples reaches 10%, 50% and 90%, respectively; its physical meaning is that the number of particles having a particle size smaller than the particle size is 10%, 50% and 90% of all the particles.

According to the present disclosure, the composition preferably has an adsorption force of 0.3-0.4mN, specifically may be 0.3mN, 0.32mN, 0.34mN, 0.36mN, 0.38mN, 0.4mN, or a random value within the range consisting of any two numerical values. The present inventors have found that under the preferred embodiment, the adsorption force of the fracturing fluid system can be significantly reduced, thereby reducing the damage to reservoirs.

In the present disclosure, the test method of absorption force is as follows: dropwise adding 5 microliter (μL) of a sample onto a glass slide (purchased from Xiangshan Tianqi (Mingzhu) Industry and Trade Co., Ltd., with a product model 7101) at room temperature (25±5°C), determining the maximum action weight (in the unit of mg) of the sample when it is

peeled off from the glass slide using a K100 model mechanical tension tester, and multiplying the maximum action weight test data with the gravitational acceleration 9.80665N/kg ($m/s^2$) to obtain the adsorption force result.

According to the present disclosure, preferably, the composition has a surface tension not exceeding 25mN/m, for which the present inventors have found that under the preferred embodiment, it is favorable to promote rapid flow of the fracturing fluid and flow back out of the reservoirs, and increase the flow back rate of the fracturing fluid. Further preferably, the composition has a surface tension of 20-23mN/m, specifically may be 20mN/m, 21mN/m, 22mN/m, 23mN/m, or a random value within the range consisting of any two numerical values.

In the present disclosure, the surface tension of the composition is measured directly according to the method in the Sinopec Enterprise Standard Q/SHCG 69-2013, "Technical requirements of cleanup additive for fracturing and acidizing", the specific process is as follows: measuring the composition at room temperature (25°C) according to the provision specified in China National Standard GB/T 5549, producing three parallel samples for each sample, calculating an arithmetic mean as the test result, wherein the difference between each measurement value and the arithmetic mean is not more than 1mN/m, and the numerical rounding of the measurement results is performed according to the China National Standard GB/T 8170.

In the present disclosure, the nanomaterial may be any nanoscale material that is capable of cooperating with a solvent to form the specific molecular aggregate hydrodynamic particle size, such as modified nanosilica material, modified nano titanium dioxide material, etc. Preferably, the nanomaterial comprises a modified nanosilica, and the modified nanosilica in an amount of 30-50wt.%, based on the total amount of the composition; the composition has a molecular aggregate hydrodynamic particle size $D_{10}$ less than 5μm, specifically may be 1μm, 2μm, 3μm, 4μm, 5μm, or a random value within the range consisting of any two numerical values; $D_{50}$ = 90-150μm, specifically may be 90μm, 100μm, 110μm, 120μm, 130μm, 140μm, 150μm, or a random value within the range consisting of any two numerical values, more preferably within the range of 90-120μm; $D_{90}$ = 180-300μm, specifically may be 180μm, 210μm, 240μm, 270μm, 300μm, or a random value within the range consisting of any two numerical values, more preferably within the range of 190-250μm; and a particle size within the range of 2-250μm. The inventors have discovered that the preferred embodiment can further improve the dispersion uniformity of the composition in a fracturing fluid system, and has a higher matching degree with the pore throats of reservoirs and a better plugging effect.

When used in fracturing fluids, preferably used as a plugging agent in the fracturing fluids, the compositions containing a nanomaterial provided by the present disclosure can effectively reduce the adsorption force of the fracturing fluid system. Preferably, the composition has an adsorption force reduction rate within the range of 24.5-50% for the fracturing fluid comprising 0.1wt% of a thickener, 0.05wt% of a cleanup additive, 0.05wt% of a clay stabilizer, and having an adsorption force of 0.52mN, to further reduce the adsorption retention and water-blocking damage of the fracturing fluid system to reservoirs.

Wherein the adsorption force reduction rate refers to the ratio of the change in adsorption force before and after the addition of the composition provided by the present disclosure (the addition amount of the composition is preferably 0.3-1wt.%) into the fracturing fluid relative to the initial adsorption force of the fracturing fluid, the calculation formula is as shown in Equation (I);

$$\Delta\varphi = \frac{\varphi-\varphi_1}{\varphi} \times 100 \qquad \text{Equation (I),}$$

in the equation:

- $\Delta\varphi$ - adsorption force reduction rate of the fracturing fluid, %;
- $\varphi$ - initial adsorption force of the fracturing fluid, mN;
- $\varphi_1$ - adsorption force of fracturing fluid after addition of the composition provided by the present disclosure, mN.

In the present disclosure, the thickener may be any substance that can be used as a thickener in the fracturing fluid, the cleanup additive may be any substance that can be used as a cleanup additive in the fracturing fluid, and the clay stabilizer may be any substance that can be used as a clay stabilizer in the fracturing fluid. Exemplarily, the thickener is an acrylamide homopolymer and/or a copolymer of acrylamide and other monomer, of which other monomer is at least one selected from the group consisting of acryloyloxy ethyl trimethyl ammonium chloride, sodium acrylate and acrylic acid; further preferably, the copolymer of acrylamide and other monomer is at least one selected from the group consisting of acrylamide-acryloyloxy ethyl trimethyl ammonium chloride copolymer, acrylamide-sodium acrylate-acrylic acid copolymer, and acrylamide-acryloyloxy ethyl trimethyl ammonium chloride-sodium acrylate-acrylic acid copolymer. The cleanup additive is polyoxyethylene amine ether and/or polyoxyethylene fatty alcohol ether; preferably, the polyoxyethylene amine ether is oleylamine polyoxyethylene ether and/or rosin amine polyoxyethylene ether, and the polyoxyethylene fatty alcohol

ether preferably is at least one selected from the group consisting of polyoxyethylene dodecyl ether, polyoxyethylene tetradecyl ether, polyoxyethylene hexadecyl ether, and polyoxyethylene octadecyl ether. The clay stabilizer is a dimethylamine quaternary ammonium salt and/or a polyquaternium, in which the polyquaternium is preferably polyquaternium-126.

In the present disclosure, the specific formulation of the fracturing fluid with an adsorption force of 0.52mN and consisting of a thickener, a cleanup additive, and a clay stabilizer may be as follows: 0.1wt.% of an acrylamide homopolymer with a weight average molecular weight of 18,000,000 + 0.05wt.% of an oleylamine polyoxyethylene ether + 0.05wt.% of a dimethylamine quaternary ammonium salt. The fracturing fluid meeting such conditions may be, for example, a fracturing fluid formed by mixing an acrylamide homopolymer (thickener SPR-08), an oleylamine polyoxyethylene ether (cleanup additive SPR-201), and a dimethylamine quaternary amine salt (clay stabilizer SPR-103) produced by Dongying Spring Petroleum Engineering Technology Co., Ltd. according to the above-mentioned ratio.

According to the present disclosure, preferably, the modified nanosilica is a modified gas phase nanosilica. The inventors have discovered that the preferred embodiment is advantageous to desirably control the molecular aggregate hydrodynamic particle size of the composition within the corresponding range, favorably match with the pore throats of the reservoirs, and reduce damage to the reservoirs.

According to the present disclosure, preferably, the modified nanosilica comprises a structural unit represented by formula (I),

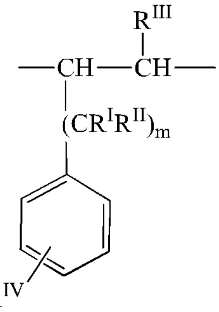

(I),

wherein $R^I$, $R^{II}$ and $R^{III}$ independently represent hydrogen or C1-C5 alkyl, for example, it may be hydrogen, methyl, ethyl, n-propyl, isopropyl, n-butyl, isobutyl, sec-butyl, tert-butyl, n-pentyl, isopentyl, cyclopropyl, cyclobutyl, cyclopentyl and the like; m is an integer of 0-5, specifically may be 0, 1, 2, 3, 4, 5; the group $R^{IV}$ on the benzene ring of the structural unit represented by formula (I) may be hydrogen (that is, the benzene ring lacks a substituent group), or the substituent group such as alkyl, alkenyl. For example, the group $R^{IV}$ is C2-C6 alkenyl, such as vinyl, n-propenyl, isopropenyl, n-butenyl, m-dibutenyl, isobutenyl, tert-butenyl, n-pentenyl, 1,3-pentadienyl, isopentenyl, n-hexenyl, 1,3-hexadienyl, cyclo-propenyl, methylcyclo-propenyl, ethylcyclo-propenyl, cyclo-pentenyl, n-hexenyl, methylcyclo-pentenyl, cyclo-hexenyl, etc.; for example, the group $R^{IV}$ is C1-C5 alkyl, such as methyl, ethyl, n-propyl, isopropyl, n-butyl, isobutyl, sec-butyl, tert-butyl, n-pentyl, isopentyl, cyclopropyl, cyclobutyl, cyclopentyl, etc.

In the present disclosure, the structural unit represented by formula (I) can be attached on the surface of nanosilica, in which the attachment can be either physisorption or connection with chemical bonds.

Further preferably, $R^I$, $R^{II}$ and $R^{III}$ independently represent hydrogen or methyl; $R^{IV}$ is hydrogen, methyl, ethyl or vinyl. The present inventors have discovered that under the preferred embodiment, through the cooperation of the nanosilica with the structural unit represented by formula (I), it is more conducive to that the composition performs the plugging effect in the fracturing fluid, and reduces damages to the reservoirs.

According to the present disclosure, preferably, content of the structural unit represented by formula (I) is 3-15wt.%, based on total amount of the composition. Specifically, the content of the structural units represented by formula (I) can be determined by a nuclear magnetic hydrogen spectrum, a nuclear magnetic carbon spectrum, and infrared detection.

According to the present disclosure, preferably, surface of the modified nanosilica is adsorbed with an active group containing fluorocarbon chain. The inventors have found that under the preferred embodiment, it is advantageous to further control surface tension of the composition and improve flow back efficiency of the fracturing fluid system.

According to the present disclosure, preferably, the active group containing fluorocarbon chain is C4-C10 perfluoroalkyl group, C4-C10 perfluoroalkoxy group, substituted aromatic group containing C4-C10 perfluoroalkyl group, or substituted aromatic group containing C4-C10 perfluoroalkoxy group; more preferably perfluoro nonenoyloxy phenyl and/or perfluorooctyl. The inventors have discovered that under the preferred embodiment, it is favorable to further control surface tension of the composition.

According to the present disclosure, the composition further comprises an aliphatic dihydric alcohol. Further preferably, the dihydric alcohol is C2-C6 aliphatic dihydric alcohol, more preferably glycol. The inventors have discovered

that under the preferred embodiment, it is conducive to reducing adsorption force of the fracturing fluid system.

According to the present disclosure, preferably, the solvent is water and/or an organic alcohol, wherein the organic alcohol may be methanol, ethanol, propanol, butanol, pentanol, phenylcarbinol, phenylethanol, phenylpropanol, phenylbutanol, phenylpentanol, liquid polyglycol (with a molecular weight of 380-430), etc. Employing an organic alcohol as the solvent is advantageous to further reduce the damage caused by fracturing fluid to the reservoirs. More preferably, the solvent is water and/or liquid polyglycol.

The second aspect of the present disclosure provides a preparation method for a composition containing a nanomaterial, wherein the method comprises: hydroxylating a gas phase nanosilica in a solvent, then contacting the hydroxylated gas phase nanosilica with a monomer represented by formula (II) in the presence of an initiator, activating the obtained product and subsequently mixing with a fluorocarbon surfactant;

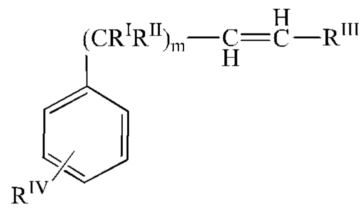

(II),

wherein $R^I$, $R^{II}$ and $R^{III}$ independently represent hydrogen or C1-C5 alkyl, $R^{IV}$ is hydrogen, C1-C5 alkyl or C2-C6 alkenyl, and m is an integer of 0-5.

In the present disclosure, the groups $R^I$, $R^{II}$, and $R^{III}$ in the monomer represented by formula (II) may be each independently hydrogen or C1-C5 alkyl, for example, the groups may be hydrogen, methyl, ethyl, n-propyl, isopropyl, n-butyl, isobutyl, sec-butyl, tert-butyl, n-pentyl, isopentyl, cyclopropyl, cyclobutyl, cyclopentyl, etc.; m is an integer of 0-5, specifically may be 0, 1, 2, 3, 4, 5. Preferably, $R^I$, $R^{II}$ and $R^{III}$ independently represent hydrogen or methyl; the group $R^{IV}$ of the monomer represented by formula (II) may be hydrogen (that is, the benzene ring lacks a substituent group), or may be the substituent group such as alkyl, alkenyl, etc. For example, the group on the benzene ring is C2-C6 alkenyl, specifically may be vinyl, n-propenyl, isopropenyl, n-butenyl, m-dibutenyl, isobutenyl, tert-butenyl, n-pentenyl, 1,3-pentadienyl, isopentenyl, n-hexenyl, 1,3-hexadienyl, cyclo-propenyl, methylcyclo-propenyl, ethylcyclo-propenyl, cyclo-pentenyl, n-hexenyl, methylcyclo-pentenyl, cyclo-hexenyl, etc.; for example, the group $R^{IV}$ is C1-C5 alkyl, specifically may be methyl, ethyl, n-propyl, isopropyl, n-butyl, isobutyl, sec-butyl, tert-butyl, n-pentyl, isopentyl, cyclopropyl, cyclobutyl, cyclopentyl, etc.

Further preferably, $R^I$, $R^{II}$ and $R^{III}$ independently represent hydrogen or methyl; $R^{IV}$ is hydrogen, methyl, ethyl or vinyl; accordingly, the monomer represented by formula (II) is styrene (CAS No:100-42-5), p-methylstyrene (CAS No:622-97-9), 3-methylstyrene (CAS No:100-80-1), l-ethyl-4-vinylbenzene (CAS No:3454-07-7), divinylbenzene (CAS No:1321-74-0).

The preparation method for the composition containing a nanomaterial provided by the present disclosure comprises: contacting the gas phase nanosilica with a monomer represented by formula (II) and carrying out the reaction, then using a fluorocarbon surfactant for modifying and adsorbing the fluorocarbon chain-containing active groups on the nanosilica surface such that the composition has a molecular aggregate hydrodynamic particle size $D_{10}$ less than 5$\mu$m, $D_{50}$ = 90-150$\mu$m, $D_{90}$ = 180-300$\mu$m, and a particle size within the range of 2-250$\mu$m. When used in a fracturing fluid, it can reduce adsorption retention and water-blocking damage caused by the fracturing fluid, thus the fracturing fluid is adaptive with the fracturing and modifying technologies of the various low permeability tight gas reservoirs, and the preparation method has a simple process and can be easily applied in the industrial production.

In the present disclosure, preferably, the hydroxylating process comprises: subjecting the gas phase nanosilica and an organic acid to the reaction I in a solvent, which obtain a first mixture, then mixing with the aliphatic dihydric alcohol to carry out the reaction II, which obtain a second mixture. The inventors have discovered that under the preferred embodiment, it is advantageous to improve the reaction efficiency of the gas phase nanosilica with the monomer represented by formula (II), and control the molecular aggregate hydrodynamic particle size of the prepared composition, thereby improving dispersion uniformity of the composition in said fracturing fluid system.

Further preferably, conditions of the reaction I comprise: at a temperature of 70-90°C, and a time of 0.5-1.5 hours; conditions of the reaction II comprises: at a temperature of 70-90°C, a rotational speed of 7,500-8,500 rpm, and a time of 0.5-1.5 hours.

According to the present disclosure, preferably, the solvent is water and/or an organic alcohol, wherein the organic alcohol may be methanol, ethanol, propanol, butanol, pentanol, benzyl alcohol, phenylethanol, phenyl propanol, phenylbutaol, phenylpentanol, liquid polyglycol (with a molecular weight of 380-430) and the like; more preferably, the solvent is water and/or liquid polyglycol. The organic acid is at least one selected from the group consisting of citric acid, malic acid, and oxalic acid; the aliphatic dihydric alcohol is preferably C2-C6 aliphatic dihydric alcohol, such as glycol, 1,2-propanediol, 1,3-propanediol, 1,2-butanediol, 1,3-butanediol, 1,4-butanediol, 1,5-pentanediol, 1,2-pentanediol, 1,3-pentanediol, 1,4-pentanediol, 1,6-hexanediol, 1,2-hexanediol, 1,3-hexanediol, 1,4-hexanediol, 1,5-hexanediol, more preferably glycol.

According to the present disclosure, preferably, the weight ratio of gas phase nanosilica, organic acid and aliphatic glycol is 1: 0.5-1 : 2-3.

According to the present disclosure, preferably, the conditions of contact comprise: at a temperature of 60-80°C, specifically may be 60°C, 65°C, 70°C, 75°C, 80°C, or a random value within the range consisting of any two numerical values; and a time of 2-8 hours, specifically may be 2 hours, 3 hours, 4 hours, 5 hours, 6 hours, 7 hours, 8 hours, or a random value within the range consisting of any two numerical values. The inventors have found that the preferred embodiment is advantageous to improve the reaction efficiency.

According to the present disclosure, preferably, the initiator is an azo initiator, such as azobisisobutyronitrile, azobisisoheptanonitrile, azobisisobutyramide hydrochloride, azobisisobutyrimidazoline hydrochloride, and the like. The inventors have discovered that under the preferred embodiment, it is advantageous to promote the addition reaction and improve the production efficiency of the composition.

According to the present disclosure, preferably, molar ratio of the nanosilica to the monomer represented by formula (II) is 1: 2-5. The inventors have discovered that the preferred embodiments is advantageous to further improve the dispersion uniformity of the produced composition in the fracturing fluid system, reduce the filtration loss during the fracturing process, and have a higher matching degree with pore throats of the reservoirs and better plugging effects.

According to the present disclosure, the gas phase nanosilica is an amorphous nanosilica product, which is a nanoscale white powder generated by the high-temperature hydrolysis of silicon halide in an oxyhydrogen flame. Preferably, the gas phase nanosilica adopted in the present disclosure has a particle size of 3-20 nm, a specific surface area of 185-410 $m^2/g$, and an apparent density of 30-60 g/L.

According to the present disclosure, preferably, the nanosilica comprises a first particle size nanosilica and a second particle size nanosilica, wherein the first particle size nanosilica has a particle size of 3-5 nm, specifically may be 3 nm, 3.5 nm, 4 nm, 4.5 nm, 5 nm, or a random value within the range consisting of any two numerical values; the second particle size nanosilica has a particle size of 15-20nm, specifically may be 15nm, 16nm, 17nm, 18nm, 19nm, 20nm, or a random value within the range consisting of any two numerical values. The inventors have discovered that under the preferred embodiment, it is favorable to further improve the dispersion uniformity of the composition in a fracturing fluid system, reduce the filtration loss during the fracturing process, and provide a higher matching degree of the composition with the pore throats of the reservoirs. Further preferably, molar ratio of the first particle size nanosilica to the second particle size nanosilica is 1: 1-3. The inventors have found that under the preferred embodiment, it is advantageous to desirably seal the pore throats of the reservoirs.

According to the present disclosure, preferably, the activating process comprises: subjecting the obtained product to an activation reaction with an amino-containing activator; further preferably, activation reaction conditions comprise: at a temperature of 60-80°C, specifically may be 60°C, 65°C, 70°C, 75°C, 80°C, or a random value within the range consisting of any two numerical values; and a time of 0.5-3 hours, specifically may be 0.5 hour, 1 hour, 1.5 hours, 2 hours, 2.5 hours, 3 hours, or a random value within the range consisting of any two numerical values.

The amino-containing activator in the present disclosure may be any activator with at least two terminal amino groups, preferably urea. The inventors have discovered that under the preferred embodiment, it is advantageous to desirably adsorb fluorine-containing groups on the nanosilica surface, and improve the flow back efficiency of fracturing fluid.

According to the present disclosure, preferably, the conditions of mixing comprise: at a temperature of 60-80°C, specifically may be 60°C, 65°C, 70°C, 75°C, 80°C, or a random value within the range consisting of any two numerical values; and a time of 2-8 hours, specifically may be 2 hours, 3 hours, 4 hours, 5 hours, 6 hours, 7 hours, 8 hours, or a random value within the range consisting of any two numerical values. The inventors have discovered that under the preferred embodiment, it is conducive to desirably adsorbing fluorine-containing groups on the nanosilica surface, which reduce the surface tension of the fracturing fluid system, and improve the flow back efficiency of the fracturing fluid.

According to the present disclosure, preferably, molar ratio of the nanosilica to the fluorocarbon surfactant is 1: 1-2. The inventors have discovered that under the preferred embodiment, it is favorable to control the surface tension of the composition, which further improve the flow back efficiency of the fracturing fluid system.

According to the present disclosure, preferably, molar ratio of fluorine element to carbon element of the fluorocarbon surfactant is 1-3 : 1;

Preferably, the fluorocarbon surfactant has an active group containing fluorocarbon chain, wherein the active group containing fluorocarbon chain is C4-C10 perfluoroalkyl, C4-C10 perfluoroalkoxy, substituted aromatic group containing C4-C10 perfluoroalkyl, or substituted aromatic group containing C4-C10 perfluoroalkoxy; more preferably, the fluorocarbon surfactant is perfluoro nonenoyloxy benzene sulfonate and/or perfluorooctyl sulfonate; wherein the perfluoro nonenoyloxy benzene sulfonate may be sodium perfluoro nonenoyloxy benzene sulfonate, potassium perfluoro nonenoyloxy benzene sulfonate and the like; the perfluorooctyl sulfonate may be sodium perfluorooctyl sulfonate,

potassium perfluorooctyl sulfonate and the like. The inventors have discovered that under the preferred embodiment, it is advantageous to enhance the adsorption effect of the fluorine-containing groups on the nanosilica surface, to decrease the surface tension of the composition, and to promote the flow back of the fracturing fluid.

Exemplarily, when the fluorocarbon surfactant is perfluoro nonenoyloxy benzene sulfonate and/or perfluorooctyl sulfonate, preferably, the preparation method for the composition containing a nanomaterial further comprises: carrying out the activation reaction of the contact product with urea, prior to mixing the contact product with a fluorocarbon surfactant; then blending the activation reaction product with the fluorocarbon surfactant. The present inventors have discovered that under the preferred embodiment, the sulfonic acid group of the fluorocarbon surfactant can couple with the amino group on the surface of the activation reaction product through chemical bonds, which is conducive to enhance adsorption efficiency of the fluorine-containing group on the nanosilica surface.

The third aspect of the present disclosure provides the composition containing a nanomaterial produced with the aforementioned preparation method.

When the composition provided by the present disclosure is used in a fracturing fluid system, it can be relatively uniformly suspended and dispersed in the fracturing fluid, and the composition significantly reduces the adsorption forces of the fracturing fluid, promotes rapid flow of the fracturing fluid and flow back out of the reservoirs, reduces the adsorption retention and water-blocking damages of the fluid to the reservoirs, and decreases rock core damage rate of the fracturing fluid to less than 15%. The fourth aspect of the present disclosure provides a use of the aforementioned composition containing a nanomaterial in a fracturing fluid.

According to the present disclosure, preferably, the composition containing a nanomaterial above is used as a plugging agent in the fracturing fluid. The composition allows for multi-scale plugging of reservoirs having various dimensions during the fracturing process, exhibits the high matching degree with the pore throats of tight sandstone reservoirs, and adapts with more technical requirements for fracturing and modification of the low permeability tight reservoirs

The fifth aspect the present disclosure provides a fracturing fluid comprises the aforementioned composition containing a nanomaterial.

According to the present disclosure, preferably, the content of the composition containing a nanomaterial is 0.3-1wt.%, based on total amount of the fracturing fluid. The inventors have discovered that under the preferred embodiment, it is advantageous to perform multi-scale plugging of reservoirs having various dimensions by the composition during the fracturing process, effectively reduce the adsorption force of the fracturing fluid system, thereby achieving the effects of improving efficiency of promoting rapid flow of the fracturing fluid and flow back out of the reservoir, and reducing the damages on the reservoirs by the fluid.

According to the present disclosure, preferably, the fracturing fluid further comprises 0.05-0.15wt.% of a thickener, 0.05-0.2wt.% of a cleanup additive; and 0.05-0.2wt.% of a clay stabilizer, based on total amount of the fracturing fluid. The fracturing fluid provided by the present disclosure is added with the composition comprising a nanomaterial and a solvent provided by the present disclosure, based on the existing conventional fracturing fluid system, which can significantly reduce the adsorption force of the fracturing fluid system as compared to the original fracturing fluid system, thereby achieving the effects of improving efficiency of promoting rapid flow of the fracturing fluid and flow back out of the reservoir, and reducing the damages on the reservoirs by the fluid.

According to the present disclosure, preferably, the thickener is an acrylamide homopolymer and/or a copolymer of acrylamide and other monomer, of which other monomer is at least one selected from the group consisting of acryloyloxy ethyl trimethyl ammonium chloride, sodium acrylate and acrylic acid; further preferably, the copolymer of acrylamide and other monomer is at least one selected from the group consisting of acrylamide-acryloyloxy ethyl trimethyl ammonium chloride copolymer, acrylamide-sodium acrylate-acrylic acid copolymer, and **acrylamide-acryloyloxy** ethyl trimethyl ammonium chloride-sodium acrylate-acrylic acid copolymer. Further preferably, the molecular weight of the acrylamide homopolymer is greater than 18,000,000 and the molecular weight of the copolymer of acrylamide and other monomer is greater than 18,000,000.

According to the present disclosure, preferably, the cleanup additive is polyoxyethylene amine ether and/or polyoxyethylene fatty alcohol ether. Further preferably, the polyoxyethylene amine ether is oleylamine polyoxyethylene ether and/or rosin amine polyoxyethylene ether; the polyoxyethylene fatty alcohol ether is at least one selected from the group consisting of polyoxyethylene dodecyl ether, polyoxyethylene tetradecyl ether, polyoxyethylene hexadecyl ether, and polyoxyethylene octadecyl ether.

According to the present disclosure, the clay stabilizer is preferably a dimethylamine quaternary ammonium salt and/or a polyquaternium, in which the polyquaternium is preferably polyquaternium-126.

The present disclosure will be described in details below with reference to examples.

In the following examples, the nanosilica feedstock I was gas phase nanosilica with particle diameter of 3-5 nm, specific surface area of 350-410 $m^2/g$ and apparent density of 30-40 g/L, which was purchased from Shanghai Yuanjiang Chemical Co., Ltd., the product model was 10279-57-8; the nanosilica feedstock II was gas phase nanosilica with particle diameter of 15-20 nm, specific surface area of 185-350 $m^2/g$ and apparent density of 40-60 g/L, which was purchased from

Shanghai Yuanjiang Chemical Co., Ltd., the product model was 262-373-8; CAS number of the sodium perfluoro nonenoyloxy benzene sulfonate is 87-56-8; CAS number of the potassium perfluoro octyl sulfonate is 2795-39-3. Unless otherwise specified in the present disclosure, all other raw materials and reagents were commercially available.

In the following examples, the test method of molecular aggregate hydrodynamic particle size was as follows: the composition containing a nanomaterial was subjected to the wet process testing at the room temperature 20-25°C and under the atmospheric pressure by using a Fritsch 22 type laser particle size analyzer according to the "liquid medium dispersion and measurement method" in the China National Standard GB/T 19077-2016 "Particle size analysis - Laser diffraction methods", wherein frequency of the laser particle size analyzer was 50-60 HZ, and pump speed was 40 L/min.

The testing of adsorption force was performed using the K100 model mechanical tension tester, the specific steps of testing at room temperature (20-25°C) were as follows: ① the instrument was shut on and the software was opened, the adsorption force test operation unit was selected; ② the adhesion force accessory was fixed on the balance lock head, and 5μL of the sample was added by using a pipette; ③ the glass slide was placed on the test bench, pressing the "OK" button, the testing of the adhesion force between the glass slide and the droplet product was performed, the maximum action weight (in the unit of mg) of the sample when it was peeled off from the glass slide was measured; ④ after completion of the testing, the test data (maximum action weight) was multiplied with the gravitational acceleration 9.80665N/kg ($m/s^2$) to obtain the adsorption force result.

The calculation formula of the adsorption force reduction rate $\Delta\varphi$ was as shown in Equation (I);

$$\Delta\varphi = \frac{\varphi - \varphi_1}{\varphi} \times 100 \qquad \text{Equation (I),}$$

in the equation:

$\Delta\varphi$ - adsorption force reduction rate of the fracturing fluid, %;
$\varphi$ - initial adsorption force of the fracturing fluid, mN;
$\varphi_1$ - adsorption force of fracturing fluid after addition of the composition provided by the present disclosure, mN.

The surface tension was measured according to the method in the Sinopec Enterprise Standard Q/SHCG 69-2013, "Technical requirements of cleanup additive for fracturing and acidizing", the specific process was as follows: the composition was measured at room temperature (25°C) according to the provision specified in China National Standard GB/T 5549, three parallel samples were produced for each sample, an arithmetic mean was calculated as the test result, wherein the difference between each measurement value and the arithmetic mean was not more than 1mN/m, and the numerical rounding of the measurement results was performed according to the China National Standard GB/T 8170; Determination of content of modified nanosilica in the composition was performed by using a drying process, the specific process was as follows: the composition was placed in a container with predetermined weight, a solvent in the liquid was evaporated or volatilized by heating or vacuum drying, a solid matter was retained, mass of the solid matter was weighed, content of modified nanosilica was obtained by dividing the weight of solid matter by the weight of the composition.

Contents of the structural units represented by formula (I) and fluoro carbon chain were determined by nuclear magnetic hydrogen spectrum, nuclear magnetic carbon spectrum, and infrared detection.

Example 1

1) 2 g of gas phase nanosilica (composed of 0.8 g of nanosilica feedstock I with particle size of 3-5 nm and 1.2 g of nanosilica feedstock II with particle size of 15-20 nm), 76.3 g of water and 1.5 g of citric acid were sequentially added into a reaction vessel equipped with a condensing device, blended homogeneously and carried out the reaction under the condition that temperature at 80°C for 1 hour, a first mixture was obtained;
2) The first mixture was suctioned into a high speed shearing machine, 5.2 g of glycol was added and blended homogeneously, the mixture was subjected to the shearing and reaction under conditions that temperature was 80°C and rotational speed was 8,000 rpm for 1 hour, a second mixture comprising a modified gas phase nanosilica was obtained;
3) 12.15 g of styrene was added into the second mixture, blended homogeneously, 0.2 g of azobisisobutyronitrile was further added simultaneously, subjected to the reaction at 70°C for 5 hours, a third mixture was obtained;
4) 10 g of urea was added into the third mixture, blended homogeneously, and subjected to the reaction at 70°C for 1 hour, a fourth mixture was obtained;

5) 36.8 g of sodium perfluoro nonenoyloxy benzene sulfonate was added into the fourth mixture, blended homogeneously, and carried out the reaction at 70°C for 5 hours, a composition containing nanosilica was prepared.

Example 2

1) 2 g of gas phase nanosilica (composed of 0.5 g of nanosilica feedstock I with particle size of 3-5 nm and 1.5 g of nanosilica feedstock II with particle size of 15-20 nm), 76.3 g of ethanol and 1.5 g of oxalic acid were sequentially added into a reaction vessel equipped with a condensing device, blended homogeneously and carried out the reaction at 70°C for 1.5 hours, a obtain a first mixture;
2) The first mixture was suctioned into a high speed shearing machine, 5.2 g of glycol was added and blended homogeneously, the mixture was subjected to the shearing and reaction under conditions that temperature was 70°C and rotational speed was 8,500 rpm for 1.5 hours, a second mixture comprising a modified gas phase nanosilica was obtained;
3) 8.68 g of styrene was added into the second mixture, blended homogeneously, 0.2 g of azobisisoheptanonitrile was further added simultaneously, subjected to the reaction at 80°C for 2 hours, a third mixture was obtained;
4) 10 g of urea was added into the third mixture, blended homogeneously, and subjected to the reaction at 80°C for 0.5 hour, a fourth mixture was obtained;
5) 18 g of potassium perfluoro octane sulfonate was added into the fourth mixture, blended homogeneously, and carried out the reaction at 80°C for 2.5 hours, a composition containing nanosilica was prepared.

Example 3

1) 4 g of gas phase nanosilica (composed of 2 g of nanosilica feedstock I with particle size of 3-5 nm and 2 g of nanosilica feedstock II with particle size of 15-20 nm), 120.5 g of water and 1.5 g of malic acid were sequentially added into a reaction vessel equipped with a condensing device, blended homogeneously and carried out the reaction at 90°C for 0.5 hour, a first mixture was obtained;
2) The first mixture was suctioned into a high speed shearing machine, 5.2 g of glycol was added and blended homogeneously, the mixture was subjected to the shearing and reaction under the conditions that temperature was 90°C and rotational speed was 7,500 rpm for 0.5 hour, a second mixture comprising a modified gas phase nanosilica was obtained;
3) 8.67 g of styrene and 10.84 g of divinylbenzene were added into the second mixture, blended homogeneously, 0.2 g of azodiisobutanimidamide hydrochloride was further added simultaneously, subjected to the reaction at 60°C for 8 hours, a third mixture was obtained;
4) 10 g of urea was added into the third mixture, blended homogeneously, and subjected to the reaction at 60°C for 3 hours, a fourth mixture was obtained;
5) 24 g of sodium perfluoro nonenoyloxy benzene sulfonate and 17g of potassium perfluoro octane sulfonate were added into the fourth mixture, blended homogeneously, and carried out the reaction at 60°C for 8 hours, a composition containing nanosilica was prepared.

Example 4

A composition containing nanosilica was prepared according to the method of Example 1, except that citric acid in step 1) was replaced with acetic acid.

Example 5

A composition containing nanosilica was prepared according to the method of Example 1, except that 2 g of gas phase nanosilica in step 1) was replaced with that composed of 1.5 g of nanosilica feedstock I with particle size of 3-5 nm and 0.5 g of nanosilica feedstock II with particle size of 15-20 nm.

Example 6

A composition containing nanosilica was prepared according to the method of Example 1, except that the dosage of styrene in step 3) was replaced with 5.2 g.

Example 7

A composition containing nanosilica was prepared according to the method of Example 1, except that the dosage of styrene in step 3) was replaced with 20 g.

Example 8

A composition containing nanosilica was prepared according to the method of Example 1, except that the azobisisobutyronitrile in step 3) was replaced with sodium sulfite.

Example 9

A composition containing nanosilica was prepared according to the method of Example 1, except that the reaction conditions in step 3) were replaced with the reaction at 60°C for 10h.

Example 10

A composition containing nanosilica was prepared according to the method of Example 1, except that the dosage of urea in step 4) was replaced with 3 g.

Example 11

A composition containing nanosilica was prepared according to the method of Example 1, except that the dosage of sodium perfluoro nonenoyloxy benzene sulfonate in step 5) was replaced with 18 g.

Example 12

A composition containing nanosilica was prepared according to the method of Example 1, except that the reaction conditions in step 5) were replaced with the reaction at 50°C for 10h.

Example 13

A composition containing nanosilica was prepared according to the method of Example 1, except that the styrene in step 3) was replaced with an equimolar amount of 3-methylstyrene (13.79 g).

Example 14

A composition containing nanosilica was prepared according to the method of Example 1, except that the styrene in step 3) was replaced with an equimolar amount of p-methylstyrene (13.79 g).

Example 15

A composition containing nanosilica was prepared according to the method of Example 1, except that the styrene in step 3) was replaced with an equimolar amount of 1-ethyl-4-vinylbenzene (15.42 g).

Example 16

A composition containing nanosilica was prepared according to the method of Example 1, except that the styrene in step 3) was replaced with an equimolar amount of divinylbenzene (15.19 g).

Comparative Example 1

1) 2 g of gas phase nanosilica (composed of 0.8 g of nanosilica feedstock I with particle size of 3-5 nm and 1.2 g of nanosilica feedstock II with particle size of 15-20 nm), 76.3 g of water and 1.5 g of citric acid were sequentially added into a reaction vessel equipped with a condensing device, blended homogeneously and carried out the reaction at 80°C for 1 hour, a first mixture was obtained;

2) The first mixture was suctioned into a high speed shearing machine, 5.2 g of glycol was added and blended homogeneously, the mixture was subjected to the shearing and reaction at 80°C for 1 hour, a second mixture comprising a modified gas phase nanosilica was obtained;
3) 10 g of urea was added into the second mixture, and blended homogeneously, and subjected to the reaction at 70°C for 1 hour, a third mixture was obtained;
4) 36.8 g of sodium perfluoro nonenoyloxy benzene sulfonate was added into the third mixture, blended homogeneously, and carried out the reaction at 70°C for 5 hours, a composition containing nanosilica was prepared.

Comparative Example 2

1) 2 g of gas phase nanosilica (composed of 0.8 g of nanosilica feedstock I with particle size of 3-5 nm and 1.2 g of nanosilica feedstock II with particle size of 15-20 nm), 76.3 g of water and 1.5 g of citric acid were sequentially added into a reaction vessel equipped with a condensing device, blended homogeneously, and carried out the reaction at 80°C for 1 hour, a first mixture was obtained;
2) The first mixture was suctioned into a high speed shearing machine, 5.2 g of glycol was added, and blended homogeneously, the mixture was subjected to the shearing and reaction at 80°C for 1 hour, a second mixture comprising a modified gas phase nanosilica was obtained;
3) 12.15 g of styrene was added into the second mixture, and blended homogeneously, 0.2 g of azobisisobutyronitrile was further added, and subjected to the reaction at 70°C for 5 hours, a composition containing nanosilica was prepared.

Comparative Example 3

1) 2 g of gas phase nanosilica (composed of 0.8 g of nanosilica feedstock I with particle size of 3-5 nm and 1.2 g of nanosilica feedstock II with particle size of 15-20 nm), 76.3 g of water and 12.15 g of styrene were blended homogeneously, 0.2 g of azobisisobutyronitrile was added simultaneously, and carried out the reaction at 70°C for 5 hours, a first mixture was obtained;
2) 10 g of urea was added into the first mixture, blended homogeneously, the mixture was subjected to the reaction at 70°C for 1 hour, a second mixture was obtained;
3) 36.8 g of sodium perfluoro nonenoyloxy benzene sulfonate was added into the second mixture, mixed uniformly, and carried out the reaction at 70°C for 5 hours, a composition containing nanosilica was prepared.

Comparative Example 4

2 g of gas phase nanosilica (composed of 0.8 g of nanosilica feedstock I with particle size of 3-5 nm and 1.2 g of nanosilica feedstock II with particle size of 15-20 nm), 76.3 g of water, 1.5 g of citric acid, 5.2 g of glycol, 12.15 g of styrene, 0.2 g of azobisisobutyronitrile, 10 g of urea, and 36.8 g of sodium perfluoro nonenoyloxy benzene sulfonate were physically blended.

Comparative Example 5

The commercially available fracturing cleanup additive SPR-201 (oleylamine polyoxyethylene ether) produced by Dongying Spring Petroleum Engineering Technology Co., Ltd. was used as Comparative Example 5.

Test Example 1

The contents of nanosilica, structural unit represented by formula (I), and fluorine carbon chain in compositions containing nanosilica prepared in Example 1-16 and Comparative Example 1-4, and in the fracturing cleanup additive of Comparative Example 5 were determined; an aqueous solution of the nanosilica feedstock I and titanium oxide (10wt%, purchased from the Xuancheng Jingrui New Materials Co., Ltd., with the model VK-TA33), an aqueous solution of nanosilica (20wt%, purchased from the Xuancheng Jingrui New Materials Co., Ltd., with the model VK-Sp15W), and a nanosilica solution were used as control, the results were shown in Table 1.

Table 1

| No. | Content of modified nanosilica, wt% | Content of structural unit represented by formula (I), wt% | Content of fluorocarbon chain, wt% |
|---|---|---|---|
| Example 1 | 42.4 | 8.4 | 13.3 |
| Example 2 | 41.9 | 7.1 | 8.5 |
| Example 3 | 47.6 | 9.7 | 18.6 |
| Example 4 | 42.3 | 8.3 | 13.1 |
| Example 5 | 42.1 | 8.2 | 13 |
| Example 6 | 39.5 | 3.8 | 14 |
| Example 7 | 41.6 | 13.2 | 12.6 |
| Example 8 | 41.2 | 8.9 | 12.4 |
| Example 9 | 41.0 | 8.1 | 12.9 |
| Example 10 | 39.3 | 8 | 13.8 |
| Example 11 | 33.8 | 9.3 | 7.5 |
| Example 12 | 41.1 | 7.8 | 12.3 |
| Example 13 | 42.9 | 8.5 | 17.4 |
| Example 14 | 42.8 | 8.4 | 17.2 |
| Example 15 | 43.6 | 8.6 | 17.2 |
| Example 16 | 43.5 | 8.6 | 17.2 |
| Comparative Example 1 | 37 | 0 | 14.6 |
| Comparative Example 2 | 22.7 | 11.3 | 0 |

Wherein, the nanosilica of Comparative Example 3 and Comparative Example 4 were not effectively modified, there were no modified nanosilica existing.

The molecular aggregate hydrodynamic particle size $D_{10}$, $D_{50}$ and $D_{90}$, adsorption force and surface tension of the compositions containing nanosilica prepared in Examples 1-16 and Comparative Example 1-4, the fracturing cleanup additive in Comparative Example 5 were tested, and nanosilica feedstock I, titanium dioxide solution, and nanosilica feedstock II were used as control, the test results were shown in Table 2.

Table 2

| No. | Molecular aggregate hydrodynamic particle size /μm | | | | Adsorption force mN | Surface tension mN/m |
|---|---|---|---|---|---|---|
| | $D_{10}$ | $D_{50}$ | $D_{90}$ | Particle size range | | |
| Example 1 | 3.17 | 91.67 | 201.90 | 3.03-203.27 | 0.3325 | 21.98 |
| Example 2 | 3.83 | 107.66 | 205.38 | 3.55-210.38 | 0.3049 | 22.12 |
| Example 3 | 3.95 | 119.50 | 221.91 | 3.90-236.76 | 0.3362 | 21.87 |
| Example 4 | 3.07 | 100.23 | 200.02 | 3.05-201.04 | 0.3324 | 21.77 |
| Example 5 | 3.23 | 108.37 | 203.46 | 3.20-208.21 | 0.3381 | 21.93 |
| Example 6 | 3.19 | 99.12 | 205.18 | 3.12-209.33 | 0.3360 | 22.03 |
| Example 7 | 3.15 | 100.21 | 204.99 | 3.09-208.95 | 0.3372 | 21.99 |
| Example 8 | 3.00 | 98.87 | 200.88 | 2.94-205.12 | 0.3349 | 22.25 |
| Example 9 | 2.91 | 96.33 | 198.21 | 2.88-200.23 | 0.3441 | 22.87 |
| Example 10 | 2.83 | 95.42 | 197.73 | 2.80-198.31 | 0.3470 | 22.91 |

(continued)

| No. | Molecular aggregate hydrodynamic particle size /μm | | | | Adsorption force mN | Surface tension mN/m |
|---|---|---|---|---|---|---|
| | $D_{10}$ | $D_{50}$ | $D_{90}$ | Particle size range | | |
| Example 11 | 2.79 | 93.37 | 195.39 | 2.71-196.77 | 0.3530 | 22.94 |
| Example 12 | 3.17 | 99.33 | 206.78 | 3.11-210.90 | 0.3360 | 22.01 |
| Example 13 | 3.90 | 111.37 | 212.55 | 3.78-220.76 | 0.3336 | 21.98 |
| Example 14 | 3.88 | 110.21 | 209.34 | 3.67-215.52 | 0.3332 | 22.01 |
| Example 15 | 3.92 | 117.23 | 218.69 | 3.82-229.98 | 0.3335 | 21.95 |
| Example 16 | 3.91 | 115.94 | 213.76 | 3.80-224.24 | 0.3334 | 21.94 |
| Comparative Example 1 | 6.34 | 85.17 | 175.32 | 6.30-175.49 | 0.2990 | 26.59 |
| Comparative Example 2 | 6.16 | 76.41 | 160.56 | 6.08-161.33 | 0.2978 | 35.33 |
| Comparative Example 3 | 20.55 | 50.52 | 128.91 | 20.50-129.11 | 0.4931 | 28.65 |
| Comparative Example 4 | 21.39 | 60.67 | 130.75 | 22.01-131.37 | 0.2631 | 28.50 |
| Comparative Example 5 | - | - | - | - | 0.2807 | 28.81 |
| Nanosilica feedstock I (an aqueous solution with a content of 5 wt%) | 19.16 | 51.04 | 120.21 | 18.92-128.77 | 0.6071 | 72.31 |
| Titanium dioxide solution (an aqueous solution with a content of 5 wt%) | 6.20 | 7.33 | 15.24 | 6.01-18.19 | 0.6037 | 73.34 |
| Nanosilica feedstock II (an aqueous solution with a content of 5 wt%) | 13.83 | 35.78 | 78.74 | 12.11-80.76 | 0.6220 | 72.11 |

Test Example 2

1. Preparation of a base fluid:

Step 1) 0.1 g of acrylamide homopolymer with weight average molecular weight of 18,000,000 (purchased from Dongying Spring Petroleum Engineering Technology Co., Ltd., product model was thickener SPR-08) was added into 99.8 g of fresh water, the adding rate was controlled during the addition process to prevent the formation of fish eyes, and the rotating speed was adjusted constantly to ensure the whirlpool condition until it was sufficiently dissolved to form a homogeneous solution;
Step 2) the stirring state was maintained, 0.05 g of dimethylamine quaternary amine salt (purchased from Dongying Spring Petroleum Engineering Technology Co., Ltd., product model was clay stabilizer SPR-103) was added into the solution obtained in step 1), and stirred homogeneously;
Step 3) the stirring speed was decreased, 0.05 g of oleylamine polyoxyethylene ether (purchased from Dongying Spring Petroleum Engineering Technology Co., Ltd., product model was cleanup additive SPR-201) was added into the product obtained in step 2), and stirred homogeneously, the desired base fluid was prepared.

Upon testing, the base fluid had the following performance indexes: viscosity with the range of 3-6 mPa.s, pH value is 6-7.

2. Preparation of a fracturing fluid

0.5 g of the compositions containing nanosilica prepared in Examples 1-16 were added into the base fluid obtained in Step 4) respectively, and stirred, then a fracturing fluid was prepared.

Test Example 3

Step 1) 0.15 g of acrylamide-acryloyloxy ethyl trimethyl ammonium chloride copolymer with weight average molecular weight of 18,000,000 (purchased from Dongying Spring Petroleum Engineering Technology Co., Ltd., product model was thickener SPR-06) was added into 99.45 g of fresh water, the adding rate was controlled during the addition process to prevent the formation of fish eyes, and the rotating speed was adjusted constantly to ensure the whirlpool condition until it was sufficiently dissolved to form a homogeneous solution, a first base fluid was obtained;
Step 2) the stirring state was maintained, 0.2 g of polyquaternium-126 (purchased from Dongying Spring Petroleum Engineering Technology Co., Ltd., product model was SPR-102) was added into the first base fluid obtained in step 1), and stirred homogeneously, a second base fluid was obtained;
Step 3) the stirring speed was decreased, 0.2 g of polyoxyethylene hexadecyl ether (purchased from Dongying Spring Petroleum Engineering Technology Co., Ltd., product model was SPR-200) was added into the second base fluid obtained in step 2), and stirred homogeneously, the third base fluid was prepared;
Step 4) 1 g of the composition containing nanosilica prepared in Example 1 was added into the third base fluid, and stirred, then a fracturing fluid was prepared.

Test Example 4

Step 1) 0.12 g of acrylamide homopolymer with weight average molecular weight of 18,000,000 (purchased from Dongying Spring Petroleum Engineering Technology Co., Ltd., product model was thickener SPR-08) was added into 99.72 g of fresh water, the adding rate was controlled during the addition process to prevent the formation of fish eyes, and the rotating speed was adjusted constantly to ensure the whirlpool condition until it was sufficiently dissolved to form a homogeneous solution, a first base fluid was obtained;
Step 2) the stirring state was maintained, 0.08 g of polyquaternium-126 (purchased from Dongying Spring Petroleum Engineering Technology Co., Ltd.) was added into the first base fluid obtained in step 1), and stirred homogeneously, a second base fluid was obtained;
Step 3) the stirring speed was decreased, 0.08 g of polyoxyethylene hexadecyl ether (purchased from Dongying Spring Petroleum Engineering Technology Co., Ltd., product model was SPR-200) was added into the second base fluid obtained in step 2), and stirred homogeneously, the third base fluid was prepared;
Step 4) 0.4 g of the composition containing nanosilica prepared in Example 1 was added into the third base fluid, and stirred, then a fracturing fluid was prepared.

Test Example 5

The fracturing fluid was prepared according to the method in Test Example 2, except that in Step 4, the dosage of composition containing nanosilica prepared in Example 1 was replaced by 1.5 g.

Test Example 6

The fracturing fluid was prepared according to the method in Test Example 2, except that in Step 4, the dosage of composition containing nanosilica prepared in Example 1 was replaced by 0.2 g.

Comparative Test Example 1

The fracturing fluid was prepared according to the method in Test Example 2, except that in Step 4), 0.5 g of the composition containing nanosilica prepared in Examples was replaced with 0.5 g of composition containing nanosilica prepared in Comparative Example 1.

Comparative Test Example 2

The fracturing fluid was prepared according to the method in Test Example 2, except that in Step 4), 0.5 g of the composition containing nanosilica prepared in Examples was replaced with 0.5 g of composition containing nanosilica prepared in Comparative Example 2.

Comparative Test Example 3

The fracturing fluid was prepared according to the method in Test Example 2, except that in Step 4), 0.5 g of the composition containing nanosilica prepared in Examples was replaced with 0.5 g of composition containing nanosilica prepared in Comparative Example 3.

Comparative Test Example 4

The fracturing fluid was prepared according to the method in Test Example 2, except that in Step 4), 0.5 g of the composition containing nanosilica prepared in Examples was replaced with 0.5 g of composition containing nanosilica prepared in Comparative Example 4.

Comparative Test Example 5

The fracturing fluid was prepared according to the method in Test Example 2, except that in Step 4), 0.5 g of the composition containing nanosilica prepared in Examples was replaced with 0.5 g of fracturing cleanup additive in Comparative Example 5.

Comparative Test Example 6

The fracturing fluid was prepared according to the method in Test Example 2, except that in Step 4), 0.5 g of the composition containing nanosilica prepared in Examples was replaced with 1 g of fracturing cleanup additive in Comparative Example 5.

Comparative Test Example 7

The fracturing fluid was prepared according to the method in Test Example 2, except that in Step 4), 0.5 g of the composition containing nanosilica prepared in Examples was replaced with 2.6 g of glycol.

Comparative Test Example 8

The fracturing fluid was prepared according to the method in Test Example 2, except that in Step 4), 0.5 g of the composition containing nanosilica prepared in Examples was replaced with 10 g of urea.

Comparative Test Example 9

The fracturing fluid was prepared according to the method in Test Example 2, except that in Step 4), 0.5 g of the composition containing nanosilica prepared in Examples was replaced with 5 g of sodium perfluoro nonenoyloxy benzene sulfonate.

Comparative Test Example 10

The fracturing fluid was prepared according to the method in Test Example 2, except that in step 4), 0.5 g of the composition containing nanosilica prepared in Examples was not added. The fracturing fluid prepared with the following method in Comparative Test Example 10 was used as the original fracturing fluid.

The adsorption forces of fracturing fluids prepared in Test Examples 2-6 and Comparative Test Examples 1-10 were measured, and the adsorption force reduction rate $\Delta\varphi$ was calculated according to Equation (I), using the adsorption force of the original fracturing fluid as $\varphi$. The results were illustrated in Table 3;

$$\Delta\varphi = \frac{\varphi - \varphi_1}{\varphi} \times 100 \qquad \text{Equation (I),}$$

in the equation:

- $\Delta\varphi$ - adsorption force reduction rate of the fracturing fluid, %;
- $\varphi$ - initial adsorption force of the original fracturing fluid, mN;

$\varphi_1$ - adsorption force of fracturing fluid after addition of the composition or fracturing cleanup additive, or glycol, or urea, or sodium perfluoro nonenoyloxy benzene sulfonate provided by the present disclosure, mN.

The fracturing fluids prepared in Test Examples 2-6 and Comparative Test Examples 1-10 were each subjected to the tight sandstone rock core damage performance evaluation experiment by using a rock core displacement device according to the Oil and Natural Gas Industry Standard SY/T 5107-2016 "The evaluation measurement for properties of water-based fracturing fluid" in China, the specific method was as follows: the fracturing fluids of Test Examples were each added into a high-temperature high-pressure filtration loss instrument, the temperature was set at 80°C, and the pressure was set at 3.5 MPa, 300 mL of a filtrate was prepared, a tight sandstone natural rock core (with a rock core length of 3.8 cm and a diameter of 2.54 cm) with the same order of magnitude and the gas measurement permeability within the range of 0.001-0.1 millidarcy was selected, the permeability of the rock core before and after the filtrate damage was measured, and the reduction rate (i.e. core damage rate) of the rock core permeability after the filtrate damage compared to the rock core permeability before the filtrate damage was calculated, the results were shown in Table 3.

The fracturing fluids prepared in Test Examples 2-6 and Comparative Test Examples 1-10 were each subjected to the evaluation experiment of permeability recovery rate (flow back efficiency), the specific method was as follows: a tight sandstone natural rock core with the permeability in the same order of magnitude was selected, the standard brine (containing 2 wt.% KC1 + 5.5 wt.% NaCl +0.45 wt.% $MgCl_2$ + 0.55 wt.% $CaCl_2$) with salt content of 20,000 mg/L was used for establishing an initial water saturation of 40 wt.%, the initial permeability of said rock core was obtained by gas measurement; each of the fracturing fluid samples was added with 0.02 wt.% ammonium persulfate and subjected to gel breaking for 180 min, a gel breaking solution was obtained, the gel breaking solution was heated to 80°C and then added into an intermediate vessel, which was pressurized by a pressure source to 3.5 MPa, the gel breaking solution was backward extruded into the rock core from an inlet on the other end of a rock core holder, after the displacement and damage with the gel breaking solution for 180min, the gas measurement rock core permeability at 24h after the damage with the gel breaking solution for 180min was measured, the ratio of the gas measurement rock core permeability at 24h after the damage relative to the initial permeability before the damage was calculated, the permeability recovery rate (24h flow back efficiency) of the fracturing fluids was obtained, the results were shown in Table 3.

Table 3

| No. | Adsorption force of fracturing fluid /mN | Adsorption force reduction rate /% | Tight sandstone core damage rate /% | Permeability recovery rate /% (24h flow back efficiency) |
|---|---|---|---|---|
| Test Example 2 (Example 1) | 0.2890 | 44.42 | 11.4 | 82.8 |
| Test Example 2 (Example 2) | 0.2627 | 49.48 | 11.1 | 81.7 |
| Test Example 2 (Example 3) | 0.2992 | 42.46 | 10.9 | 83.1 |
| Test Example 2 (Example 4) | 0.3071 | 40.94 | 11.8 | 81.5 |
| Test Example 2 (Example 5) | 0.3299 | 36.56 | 12.9 | 80.9 |
| Test Example 2 (Example 6) | 0.3311 | 36.33 | 13.0 | 79.4 |
| Test Example 2 (Example 7) | 0.3489 | 32.90 | 13.3 | 78.2 |
| Test Example 2 (Example 8) | 0.3345 | 35.67 | 13.1 | 78.9 |
| Test Example 2 (Example 9) | 0.3499 | 32.71 | 13.9 | 78.0 |
| Test Example 2 (Example 10) | 0.3504 | 32.62 | 14.2 | 78.4 |
| Test Example 2 (Example 11) | 0.3788 | 27.15 | 14.4 | 76.5 |
| Test Example 2 (Example 12) | 0.3512 | 32.46 | 13.6 | 78.3 |
| Test Example 2 (Example 13) | 0.2988 | 42.99 | 11.0 | 83.1 |
| Test Example 2 (Example 14) | 0.2903 | 44.61 | 11.4 | 82.8 |
| Test Example 2 (Example 15) | 0.2964 | 43.45 | 11.3 | 83.0 |
| Test Example 2 (Example 16) | 0.2942 | 43.87 | 11.1 | 82.9 |
| Test Example 3 | 0.3911 | 24.79 | 14.9 | 74.1 |
| Test Example 4 | 0.3827 | 26.40 | 15.0 | 72.9 |
| Test Example 5 | 0.3559 | 31.56 | 14.1 | 76.0 |

(continued)

| No. | Adsorption force of fracturing fluid /mN | Adsorption force reduction rate /% | Tight sandstone core damage rate /% | Permeability recovery rate /% (24h flow back efficiency) |
|---|---|---|---|---|
| Test Example 6 | 0.3898 | 25.04 | 14.8 | 74.6 |
| Comparative Test Example 1 | 0.4019 | 22.71 | 28.5 | 70.1 |
| Comparative Test Example 2 | 0.4352 | 16.31 | 35.9 | 63.4 |
| Comparative Test Example 3 | 0.4255 | 18.17 | 29.8 | 69.7 |
| Comparative Test Example 4 | 0.4499 | 13.48 | 33.2 | 68.1 |
| Comparative Test Example 5 | 0.4573 | 12.06 | 42.5 | 59.8 |
| Comparative Test Example 6 | 0.4406 | 15.27 | 40.3 | 62.2 |
| Comparative Test Example 7 | 0.4113 | 20.9 | 38.7 | 63.8 |
| Comparative Test Example 8 | 0.4296 | 17.38 | 39.8 | 63.5 |
| Comparative Test Example 9 | 0.4588 | 11.77 | 39.4 | 68.7 |
| Original fracturing fluid | 0.52 | 0.00 | 50.6 | 50.1 |

The above content describes in detail the preferred embodiments of the present disclosure, but the present disclosure is not limited thereto. A variety of simple modifications can be made in regard to the technical solutions of the present disclosure within the scope of the technical concept of the present disclosure, including a combination of individual technical features in any other suitable manner, such simple modifications and combinations thereof shall also be regarded as the content disclosed by the present disclosure, each of them falls into the protection scope of the present disclosure.

## Claims

1. A composition containing a nanomaterial, in which the composition comprises a nanomaterial and a solvent, wherein hydrodynamic particle size of molecular aggregate of the composition satisfies that $D_{10}$ less than 30 $\mu$m, $D_{50}$ = 50-150 $\mu$m, $D_{90}$ = 150-300 $\mu$m.

2. The composition according to claim 1, wherein the composition has an adsorption force of 0.3-0.4 mN;
   preferably, the composition has a surface tension not exceeding 25mN/m, more preferably of 20-23 mN/m.

3. The composition according to claim 1 or 2, wherein the nanomaterial comprises a modified nanosilica, and the modified nanosilica in an amount of 30-50wt%, based on the total amount of the composition;
   hydrodynamic particle size of molecular aggregate of the composition satisfies that $D_{10}$ less than 5$\mu$m, $D_{50}$ = of 90-150$\mu$m, $D_{90}$ = 180-300$\mu$m, and a particle size within the range of 2-250$\mu$m.

4. The composition according to claim 3, wherein the composition has an adsorption force reduction rate within the range of 24.5-50% for the fracturing fluid comprising 0.1wt% of a thickener, 0.05wt% of a cleanup additive, 0.05wt% of a clay stabilizer, and having an adsorption force of 0.52mN.

5. The composition according to claim 3 or 4, wherein the modified nanosilica comprises a structural unit represented by formula (I),

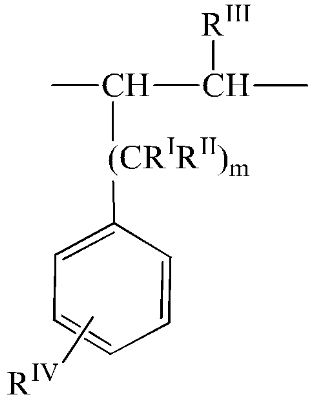

(I),

wherein $R^I$, $R^{II}$ and $R^{III}$ independently represent hydrogen or C1-C5 alkyl, $R^{IV}$ is hydrogen, C1-C5 alkyl or C2-C6 alkenyl, and m is an integer of 0-5; preferably, content of the structural unit represented by formula (I) is 3-15wt%, based on total amount of the composition.

6. The composition according to any one of claims 3-5, wherein surface of the modified nanosilica is adsorbed with an active group containing fluorocarbon chain;

preferably, the active group containing fluorocarbon chain is C4-C10 perfluoroalkyl group, C4-C10 perfluoroalkoxy group, substituted aromatic group containing C4-C10 perfluoroalkyl group, or substituted aromatic group containing C4-C10 perfluoroalkoxy group; more preferably perfluoro nonenoyloxy phenyl and/or perfluorooctyl; preferably, content of the fluorine carbon chain is 7-20wt%, based on total amount of the composition.

7. The composition according to any one of claims 1-6, wherein the composition further comprises an aliphatic dihydric alcohol;
preferably, the dihydric alcohol is C2-C6 aliphatic dihydric alcohol, more preferably glycol.

8. The composition according to any one of claims 1-7, wherein the solvent is water and/or liquid polyglycol.

9. A preparation method for a composition containing a nanomaterial, wherein the method comprises: hydroxylating a gas phase nanosilica in a solvent, then contacting the hydroxylated gas phase nanosilica with a monomer represented by formula (II) in the presence of an initiator, activating the obtained product and subsequently mixing with a fluorocarbon surfactant;

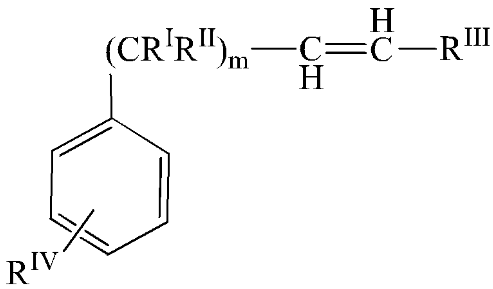

(II),

wherein $R^I$, $R^{II}$ and $R^{III}$ independently represent hydrogen or C1-C5 alkyl, $R^{IV}$ is hydrogen, C1-C5 alkyl or C2-C6 alkenyl, and m is an integer of 0-5.

10. The preparation method according to claim 9, wherein the hydroxylating process comprises:

subjecting the gas phase nanosilica and an organic acid to the reaction I in a solvent, then mixing with the aliphatic dihydric alcohol to carry out the reaction II;
preferably, conditions of the reaction I comprise: at a temperature of 70-90°C, and a time of 0.5-1.5 hours; conditions of the reaction II comprises: at a temperature of 70-90°C, a rotational speed of 7,500-8,500 rpm, and a time of 0.5-1.5 hours;

preferably, the solvent is water and/or liquid polyglycol, the organic acid is at least one selected from the group consisting of citric acid, malic acid and oxalic acid, and the aliphatic dihydric alcohol is C2-C6 aliphatic dihydric alcohol, more preferably glycol;
preferably, weight ratio of the gas phase nanosilica, the organic acid and the aliphatic dihydric alcohol is 1: 0.5-1 : 2-3.

**11.** The preparation method according to claim 9 or 10, wherein conditions of contacting comprise:

at a temperature of 60-80°C, and a time of 2-8 hours;
the initiator is an azo initiator;
preferably, molar ratio of the nanosilica to the monomer represented by formula (II) is 1: 2-5.

**12.** The preparation method according to any one of claims 9-11, wherein the nanosilica has a property in which a particle size of 3-20 nm, a specific surface area of 185-410 $m^2$/g, and an apparent density of 30-60 g/L;

preferably, the gas phase nanosilica comprises a first particle size nanosilica and a second particle size nanosilica, wherein the first particle size nanosilica has a particle size of 3-5 nm, and the second particle size nanosilica has a particle size of 15-20 nm;
preferably, molar ratio of the first particle size nanosilica to the second particle size nanosilica is 1: 1-3.

**13.** The preparation method according to any one of claims 9-12, wherein the activating process comprises: subjecting the obtained product to an activation reaction with an amino-containing activator, the activation reaction conditions comprise: at a temperature of 60-80°C, and a time of 0.5-3 hours;
conditions of mixing comprise: at a temperature of 60-80°C, and a time of 2-8 hours.

**14.** The preparation method according to any one of claims 9-13, wherein molar ratio of the nanosilica to the fluorocarbon surfactant is 1: 1-2.

**15.** The preparation method according to any one of claims 9-14, wherein molar ratio of fluorine element to carbon element in the fluorocarbon surfactant is 1-3 : 1.
preferably, the fluorocarbon surfactant has an active group containing fluorocarbon chain, wherein the active group containing fluorocarbon chain is C4-C10 perfluoroalkyl, C4-C10 perfluoroalkoxy, substituted aromatic group containing C4-C10 perfluoroalkyl, or substituted aromatic group containing C4-C10 perfluoroalkoxy; more preferably, the fluorocarbon surfactant is perfluoro nonenoyloxy benzene sulfonate and/or perfluoro octyl sulfonate.

**16.** The composition containing a nanomaterial produced with the preparation method according to any one of claims 9-15.

**17.** Use of the composition containing a nanomaterial according to any one of claims 1-8 and 16 in a fracturing fluid, preferably using as a plugging agent.

**18.** A fracturing fluid comprises the composition containing a nanomaterial according to any one of claims 1-8 and 16.

**19.** The fracturing fluid according to claim 18, wherein content of the composition containing a nanomaterial is 0.3-1wt%, based on the total amount of the fracturing fluid;

preferably, the fracturing fluid further comprises 0.05-0.15wt% of a thickener, 0.05-0.2wt% of a cleanup additive; and 0.05-0.2wt% of a clay stabilizer, based on total amount of the fracturing fluid;
preferably, the thickener is an acrylamide homopolymer and/or a copolymer of acrylamide and other monomer, of which other monomer is at least one selected from the group consisting of acryloyloxy ethyl trimethyl ammonium chloride, sodium acrylate and acrylic acid; further preferably, the copolymer of acrylamide and other monomer is at least one selected from the group consisting of acrylamide-acryloyloxy ethyl trimethyl ammonium chloride copolymer, acrylamide-sodium acrylate-acrylic acid copolymer, and acrylamide-acryloyloxy ethyl trimethyl ammonium chloride-sodium acrylate-acrylic acid copolymer;
preferably, the cleanup additive is polyoxyethylene amine ether and/or polyoxyethylene fatty alcohol ether;
preferably, the polyoxyethylene amine ether is oleylamine polyoxyethylene ether and/or rosin amine polyoxyethylene ether; the polyoxyethylene fatty alcohol ether is at least one selected from the group consisting of polyoxyethylene dodecyl ether, polyoxyethylene tetradecyl ether, polyoxyethylene hexadecyl ether, and polyoxyethylene octadecyl ether;
preferably, the clay stabilizer is a dimethylamine quaternary ammonium salt and/or a polyquaternium.

**INTERNATIONAL SEARCH REPORT**

International application No. **PCT/CN2024/096722**

**A. CLASSIFICATION OF SUBJECT MATTER**

C09K8/66(2006.01)i; C09K8/504(2006.01)i; C09K8/03(2006.01)i

According to International Patent Classification (IPC) or to both national classification and IPC

**B. FIELDS SEARCHED**

Minimum documentation searched (classification system followed by classification symbols)

IPC:C09K8/-

Documentation searched other than minimum documentation to the extent that such documents are included in the fields searched

Electronic data base consulted during the international search (name of data base and, where practicable, search terms used)

CNTXT, ENTXTC, VEN, CNKI: 二氧化硅, 分子聚集体, 分子聚集体流体动力学粒径, 封堵剂, 粒径, 单体, 流体动力学粒径, 中值粒径, 纳米, 溶剂, 微米, 压裂液, D10, D50, μm, D90, particle size median, median diameter, silicon dioxide, nanometre, blocking agent, molecular aggregate hydrodynamic particle size, killing fluid, solvent, monomer, micron

**C. DOCUMENTS CONSIDERED TO BE RELEVANT**

| Category* | Citation of document, with indication, where appropriate, of the relevant passages | Relevant to claim No. |
|---|---|---|
| A | CN 104628931 A (ZHEJIANG GUANQI NANO TECH. CO., LTD.) 20 May 2015 (2015-05-20)<br>description, paragraphs 0005-0013 | 1-19 |
| A | CN 117402602 A (PETROCHINA CO., LTD.) 16 January 2024 (2024-01-16)<br>description, paragraphs 0013-0019 | 1-19 |
| A | CN 109915093 A (NORTHEAST PETROLEUM UNIVERSITY) 21 June 2019 (2019-06-21)<br>abstract | 1-19 |
| A | CN 114196384 A (CHINA PETROLEUM & CHEMICAL CORP. et al.) 18 March 2022 (2022-03-18)<br>entire description | 1-19 |
| A | CN 115536789 A (SINOPEC OILFIELD SERVICE CORP. et al.) 30 December 2022 (2022-12-30)<br>entire description | 1-19 |

☑ Further documents are listed in the continuation of Box C. ☑ See patent family annex.

* Special categories of cited documents:
- "A" document defining the general state of the art which is not considered to be of particular relevance
- "D" document cited by the applicant in the international application
- "E" earlier application or patent but published on or after the international filing date
- "L" document which may throw doubts on priority claim(s) or which is cited to establish the publication date of another citation or other special reason (as specified)
- "O" document referring to an oral disclosure, use, exhibition or other means
- "P" document published prior to the international filing date but later than the priority date claimed
- "T" later document published after the international filing date or priority date and not in conflict with the application but cited to understand the principle or theory underlying the invention
- "X" document of particular relevance; the claimed invention cannot be considered novel or cannot be considered to involve an inventive step when the document is taken alone
- "Y" document of particular relevance; the claimed invention cannot be considered to involve an inventive step when the document is combined with one or more other such documents, such combination being obvious to a person skilled in the art
- "&" document member of the same patent family

| Date of the actual completion of the international search | Date of mailing of the international search report |
|---|---|
| **23 September 2024** | **09 October 2024** |
| Name and mailing address of the ISA/CN<br>**China National Intellectual Property Administration (ISA/CN)**<br>**China No. 6, Xitucheng Road, Jimenqiao, Haidian District, Beijing 100088** | Authorized officer<br><br>Telephone No. |

Form PCT/ISA/210 (second sheet) (July 2022)

**INTERNATIONAL SEARCH REPORT**

International application No.
**PCT/CN2024/096722**

**C. DOCUMENTS CONSIDERED TO BE RELEVANT**

| Category* | Citation of document, with indication, where appropriate, of the relevant passages | Relevant to claim No. |
|---|---|---|
| A | CN 116948209 A (SINOPEC OILFIELD SERVICE CORP. et al.) 27 October 2023 (2023-10-27)<br>entire description | 1-19 |
| A | US 2022049148 A1 (CHINA UNIVERSITY OF PETROLEUM) 17 February 2022 (2022-02-17)<br>abstract | 1-19 |

Form PCT/ISA/210 (second sheet) (July 2022)

**INTERNATIONAL SEARCH REPORT**
**Information on patent family members**

International application No.
**PCT/CN2024/096722**

| Patent document cited in search report | | | Publication date (day/month/year) | Patent family member(s) | | | Publication date (day/month/year) |
|---|---|---|---|---|---|---|---|
| CN | 104628931 | A | 20 May 2015 | None | | | |
| CN | 117402602 | A | 16 January 2024 | None | | | |
| CN | 109915093 | A | 21 June 2019 | None | | | |
| CN | 114196384 | A | 18 March 2022 | None | | | |
| CN | 115536789 | A | 30 December 2022 | None | | | |
| CN | 116948209 | A | 27 October 2023 | None | | | |
| US | 2022049148 | A1 | 17 February 2022 | US | 2022204833 | A1 | 30 June 2022 |
| | | | | US | 11578251 | B2 | 14 February 2023 |
| | | | | US | 2022049148 | A1 | 17 February 2022 |
| | | | | CN | 111778004 | A | 16 October 2020 |
| | | | | CN | 111778004 | B | 13 April 2021 |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- CN 202410151238

### Non-patent literature cited in the description

- *CHEMICAL ABSTRACTS*, 87-56-8
- *CHEMICAL ABSTRACTS*, 2795-39-3